# EUROPÄISCHE PATENTSCHRIFT

(11) **EP 2 700 911 B1**
(45) Veröffentlichungstag und Bekanntmachung des Hinweises auf die Patenterteilung: **16.11.2016**
(21) Anmeldenummer: 12181536.9
(22) Anmeldetag: 23.08.2012
(51) Int. Cl.: G01D 5/347

(54) **Vorrichtung zur Ermittlung des Drehwinkels, der Drehgeschwindigkeit und/oder der Drehrichtung eines um eine Drehachse verdrehbaren Teils**
Device for determining the rotation angle, rotation speed and/or the direction of rotation of a rotating part around an axis
Dispositif de détermination de l'angle de rotation, de la vitesse de rotation et/ou du sens de rotation d'une pièce tournant autour d'un axe

(43) Veröffentlichungstag der Anmeldung: 26.02.2014
(73) Patentinhaber: Elmos Semiconductor Aktiengesellschaft, 44227 Dortmund (DE)
(72) Erfinder: Burchard, Bernd, 44227 Dortmund (DE)
(74) Vertreter: dompatent von Kreisler Selting Werner - Partnerschaft von Patent- und Rechtsanwälten mbB

(56) Entgegenhaltungen:
- DE-A1- 3 939 905
- DE-A1-102007 012 271
- US-A- 5 815 269
- US-A- 5 983 720

## Beschreibung

Die Erfindung betrifft eine Vorrichtung zur Ermittlung des Drehwinkels, der Drehgeschwindigkeit und/oder der Drehrichtung eines um eine Drehachse verdrehbaren Teils.

Bei einer Vielzahl von Anwendungen ist es erforderlich, die Verdrehung eines Teils detektieren zu können, um daraus beispielsweise den Verdrehwinkel, die Drehrichtung und/oder die Geschwindigkeit des Teils ermitteln zu können. Derartige Drehwinkelmesser sind in einer Vielzahl von Ausgestaltungen bekannt, wobei sich insbesondere berührungslos arbeitende und vorzugsweise optisch arbeitende Drehwinkelmesser als besonders vorteilhaft herausgestellt haben.

Die bekannten optischen Drehwinkelmesser arbeiten ganz überwiegend mit Kodierscheiben, die Markierungen tragen, welche unterschiedlich gestaltet sind und optisch erfasst werden. Die aktuell erfasste Markierung erlaubt es auf Grund ihrer Kodierung, die aktuelle Verdrehposition zu ermitteln. Drehwinkelmesser der zuvor genannten Art sind beispielhaft in DD-A-252 891, DE-A-100 41 095, DE-B-197 58 104, DE-A-10 2004 011 146, DE-U-20 2008 009 107 und DE-A-39 39 905 beschrieben.

Aus DE-A-10 2007 012 271 ist ein Sensor zur Erfassung des Drehwinkels einer mechanischen Welle bekannt. Die mechanische Welle steht dabei in Gewindeeingriff mit einem bei Verdrehung der Welle ausschließlich axial verschiebbaren Mitnehmerelement mit optischem Kontrast. Anhand der Linearverschiebeposition dieses Mitnehmerelements kann dann mit Hilfe eines CMOS-Bildsensors auf die Winkellage der Welle geschlossen werden.

In der US 5,983,720 wird ein Winkelgeber beschrieben bei dem das verdrehbare Teil mit einer lichtreflektierenden Oberfläche versehen ist.

Aufgabe der Erfindung ist es, eine Vorrichtung zur Ermittlung des Drehwinkels und/oder der Drehgeschwindigkeit und/oder der Drehrichtung eines um eine Drehachse verdrehbaren Teils zu schaffen, die einen konstruktiv einfachen Aufbau aufweist und zuverlässig arbeitet sowie montage- und wartungsfreundlich ist.

Zur Lösung dieser Aufgabe wird mit der Erfindung eine Vorrichtung zur Ermittlung des Drehwinkels und/oder der Drehgeschwindigkeit und/oder der Drehrichtung eines um eine Drehachse verdrehbaren Teils vorgeschlagen, die versehen ist mit den Merkmalen des Anspruchs 1. Einzelne Ausgestaltungen der Erfindung sind Gegenstand der Unteransprüche.

Der erfindungsgemäße optische Drehwinkelmesser, mit dem sich je nach Ausgestaltung und Verarbeitung der Messsignale der Drehwinkel eines verdrehbaren Teils, dessen Drehrichtung und/oder dessen Drehgeschwindigkeit ermitteln lässt, umfasst einen um eine Drehachse verdrehbaren Drehgeber, der mit dem zu vermessenden verdrehbaren Teil in Mitdreh-Wirkverbindung bringbar ist. Dies kann beispielsweise durch eine mechanische oder auch magnetische Verbindung des Drehgebers mit dem verdrehbaren Teil erfolgen. Der Drehgeber weist an seiner Außenseite eine mit Hilfe eines optischen Sensors berührungslos, d.h. optisch erfassbare Markierung auf. Diese Markierung befindet sich in radialem Abstand zur Drehachse des Drehgebers. Eine Beleuchtungseinheit sorgt dafür, dass von der Markierung in Richtung auf den optischen Sensor Detektionsstrahlung ausgeht. Vorzugsweise arbeitet die Markierung reflektiv, wird also von der Beleuchtungseinheit beleuchtet, und zwar innerhalb ihres gesamten Bereichs, innerhalb dessen sich die Markierung bei einer Verdrehung des Drehgebers bewegt. Der optische Sensor erfasst nun drehwinkelabhängig Detektionsstrahlung von der Markierung. Da das Messsignal des Sensors drehwinkelabhängig ist, kann somit aus dem Messsignal auf die aktuelle Drehposition bzw. den aktuellen Drehwinkel des Drehgebers und damit des zu vermessenden verdrehbaren Teils geschlossen werden. Durch Weiterverarbeitung des Messsignals des Sensors können die Drehrichtung und die aktuelle Drehgeschwindigkeit ermittelt werden, wenn dies gewünscht ist.

Gemäß einer ersten Ausgestaltung der Erfindung ist vorgesehen, dass der Drehgeber eine Umfangsfläche aufweist, auf der die Markierung zur Abgabe der Detektionsstrahlung in zur Drehachse im Wesentlichen radialer Richtung angeordnet ist. Die Markierung erzeugt bei dieser Ausgestaltung der Erfindung im Wesentlichen radial nach außen gerichtete Detektionsstrahlung, die von dem optischen Sensor, der um den Drehgeber herum angeordnet ist, empfangen wird. Der optische Sensor sollte sich dabei über denjenigen Bereich erstrecken, innerhalb dessen der Drehwinkel des Drehgebers ermittelt werden soll (Messbereich). Der optische Sensor kann sich dabei beispielsweise über 360° erstrecken, um entsprechende Drehwinkel des Drehgebers ermitteln zu können.

Alternativ ist es möglich, dass die Markierung ihre Detektionsstrahlung auch radial einwärts abgibt, so dass der optische Sensor in diesem Fall von der Umfangsfläche des Drehgebers (innerhalb seines Messbereichs) umgeben ist.

Bei Anordnung der optischen Markierung an der Umfangsfläche des Drehgebers kann die Detektionsstrahlung auch in einem spitzen Winkel zur Drehachse des Drehgebers hin bzw. in einem spitzen Winkel von dieser Drehachse weg gerichtet abgeben. Damit entsteht ein sozusagen mit dem Drehgeber mitdrehender Detektionsstrahl, dessen räumliche optische Einfallachse auf den Sensor drehwinkelabhängig variiert. Eine bevorzugte Ausgestaltung der Erfindung zur Nutzung des zuvor beschriebenen Konzepts der messtechnischen Auswertung der drehwinkelabhängigen Detektionsstrahlungseinfallrichtung auf den Sensor sieht beispielsweise vor, dass der Drehgeber eine von der Drehachse durchdrungene, vorzugsweise zur Drehachse im Wesentlichen radiale Stirnfläche aufweist, auf der die Markierung zur Abgabe von Detektionsstrahlung in einem spitzen Winkel von der Drehachse weg gerichtet oder in einem spitzen Winkel zur Drehachse hin gerichtet angeordnet ist.

Bei der zuvor genannten Variante ist es weiterhin von Vorteil, wenn der optische Sensor zentrisch in Verlängerung der Drehachse des Drehgebers angeordnet ist. Hierbei kann ferner vorgesehen sein, dass der optische Sensor die räumliche Richtung, in der von der optischen Markierung Detektionsstrahlung. auf den Sensor auftrifft, sensiert.

Zur Detektion der räumlichen Detektionsstrahlungseinfallrichtung auf den optischen Sensor kann dieser die Strahlungseinfallrichtung zweckmäßigerweise in einem Zylinderkoordinatensystem mit der Drehachse als Bezugsachse oder in einem kartesischen Koordinatensystem mit zwei senkrecht aufeinander stehenden Achsen, deren Kreuzprodukt parallel zur Drehachse gerichtet ist, ermitteln.

Als winkelabhängig arbeitender strahlungseinfallwinkelsensitiver Sensor eignet sich insbesondere ein solcher, der ein ein- oder zweidimensionales Array von jeweils für einen anderen Detektionsstrahlungseinfallwinkel sensitiven Sensorelementen aufweist. Ein optischer Sensor, der sich für diese Zwecke einsetzen lässt, ist beispielhaft in DE-C-102 18 160 und WO-A-2012/000968 beschrieben.

Die Strahlungseinfallwinkelselektivität der erfindungsgemäßen Vorrichtung bzw. des erfindungsgemäß vorgesehenen Sensors der Vorrichtung lässt sich auch durch ein (mikro-)optisches Filter realisieren, das auftreffende Strahlung beugt bzw. bricht oder ablenkt, woraufhin die das optische Filter passierende Strahlung auf den Sensor bzw. dessen Sensorelemente auftrifft, und zwar vorzugsweise in zur Drehachse paralleler Richtung. Die Einfallrichtungsselektivität erfolgt bei dieser Ausgestaltung der Erfindung also mit Hilfe des optischen Filters.

Zur Unterdrückung von Störeinflüssen durch Umgebungsstrahlung ist die Vorrichtung zweckmäßigerweise durch ein Gehäuse gekapselt.

Die erfindungsgemäße Vorrichtung umfasst darüber hinaus auch eine Auswerteeinheit (gegebenenfalls zusätzlich auch noch eine Ansteuereinheit für die Beleuchtungseinheit). Mit Hilfe der Auswerteeinheit werden die Messsignale des Sensors ausgewertet. Diese Messsignale repräsentieren die empfangene Detektionsstrahlung und insbesondere deren räumliche Einfallwinkelabhängigkeit. Je nach der zu ermittelnden Größe (Drehwinkel, Drehposition, Drehrichtung und Drehgeschwindigkeit) ist die Auswerteeinheit unterschiedlich beschaffen, um die jeweils interessierende Größe liefern zu können.

Schließlich sei noch erwähnt, dass der Drehgeber der erfindungsgemäßen Vorrichtung sowohl als Absolutwertgeber als auch als Relativwertgeber ausgestaltet sein kann.

Aus der vorstehenden Beschreibung ergibt sich, dass die erfindungsgemäße Vorrichtung zumindest eines der nachfolgenden Merkmale aufweist:
- einen Drehgeber (im einfachsten Fall eine Achse), der bzw. die mit einer Verdrehachse des zu vermessenden Teils in Wirkverbindung gebracht werden kann, um den Drehwinkel (und daraus abgeleitet die Drehgeschwindigkeit und/oder die Drehrichtung) des zu vermessenden Teils erfassen zu können;
- einen Markierungsträger, typischerweise als Scheibe ausgebildet, der mit dem Drehgeber gekoppelt ist oder mit diesem integral ausgebildet ist;
- eine Markierung, die mit einem radialen Abstand von der Drehachse des Markierungsträgers angeordnet ist;
- einen (Lichteinfallwinkel-)Sensor, der
   - in Verlängerung der Drehachse derart angebracht sein kann, dass eine direkte barrierefreie optische Linie zwischen der Markierung und dem Sensor besteht,
   - entweder den Winkel ϕ eines Zylinderkoordinatensystems um die Drehachse liefert oder zwei Winkel θ und ε um zwei Achsen x und y liefert, die senkrecht aufeinander stehen und deren Kreuzprodukt parallel zur Drehachse ist,
   - den Lichteinfall über ein (mikro-)optisches refraktives Filter erfasst,
   - über mindestens ein Array von lichtempfindlichen Sensorelementen gegebenenfalls unterhalb des (mikro-)optischen Filters verfügt,
   - in CMOS-Technologie gefertigt ist und/oder
   - entsprechend als Winkelsensor aufgebaut ist;
- eine Beleuchtungseinheit, die die Markierung in jeder Achs- bzw. Drehposition mit im Wesentlichen gleicher homogener Beleuchtungsstärke ausleuchtet, ohne direkt in den Lichtwinkelsensor einzustrahlen;
- eine Kapselung (Gehäuse der Vorrichtung), die Licht von außen abhält;
- ein Rechnersystem, das monolithisch mit dem Lichtwinkelsensor integriert sein kann;
- die Möglichkeit einer Kommunikation nach außen mittels einer beispielsweise Busschnittstelle;
- die Lichtintensitätswerte der Sensoren werden in einen oder zwei Winkeln umgerechnet;
- Achse, Drehgeber, Markenträger und Innenraum der Kapselung (sofern vorhanden) sowie sonstige Einbauten (sofern vorhanden) sind typischerweise schwarz und matt ausgeführt, sind also reflektionsarm bzw. im Idealfall nicht reflektierend;
- die Markierung auf dem Markierungsträger ist typischerweise weiß mit möglichst hohem Reflektionsgrad in Richtung des Lichteinfallwinkelsensors;
- die Markierung kann auch spiegelnd ausgeführt sein, was jedoch den Nachteil haben könnte, dass Vibrationen u.dgl. zu einer Modulation des Lichteinfalls auf den Sensor führen können.

Die Erfindung wird nachfolgend anhand der Zeichnungen näher erläutert. Im Einzelnen zeigen dabei:
- Fig. 1: schematisch ein erstes Ausführungsbeispiel einer erfindungsgemäßen Vorrichtung und
- Fig. 2: schematisch ein zweites Ausführungsbeispiel der Vorrichtung.

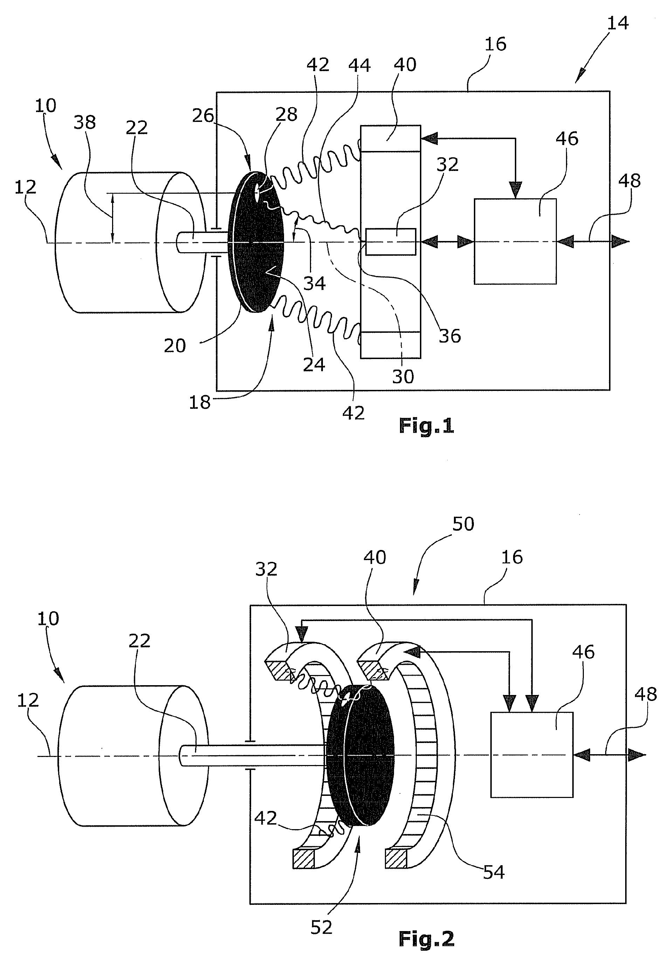

In Fig. 1 ist mit 10 ein rotierendes Teil bezeichnet, dessen Drehwinkel relativ zur Drehachse 12 messtechnisch erfasst werden soll. Hierzu dient eine Vorrichtung 14, deren einzelne Bestandteile nachfolgend näher erläutert werden.

Die Vorrichtung 14 ist in einem bei 16 angedeuteten Gehäuse untergebracht. Die Vorrichtung 14 weist einen Drehgeber 18 auf, der in diesem Ausführungsbeispiel als Scheibe 20 ausgeführt ist. Die Scheibe 20 bzw. der Drehgeber 18 steht in Drehwirkverbindung mit dem rotierenden Teil 10, was in diesem Ausführungsbeispiel durch eine Drehachse 22 erfolgt, die konzentrisch und in Verlängerung der Drehachse 12 des rotierenden Teils 10 angeordnet ist. Der Drehgeber 18 weist in diesem Ausführungsbeispiel eine schwarze Oberfläche und insbesondere eine schwarze Stirnfläche 24 auf, die eine (einzige) optisch erkennbare Markierung 26 in Form eines weißen "Flecks" 28 auf der Stirnfläche 24 der Scheibe 20 ausgebildet ist.

Die Scheibe 20 bzw. der Drehgeber 18 rotiert um die gedachte Drehachse 30, die zusammenfällt mit der Drehachse 22 und der Drehachse 12 des rotierenden Teils 10. Auf der Drehachse 30 befindet sich ein optischer Sensor 32, der für Detektionsstrahlung empfindlich ist, die in Abhängigkeit von einem räumlichen Einfallwinkel 34 auf eine lichtempfindliche Fläche 36 des Sensors 32 fällt. Die Detektionsstrahlung wird in diesem Ausführungsbeispiel von dem weißen Fleck 28 reflektiert, der in einem radialen Abstand 38 von der Drehachse 22 des Drehgebers 18 entfernt angeordnet ist. Der weiße Fleck 28 wird in diesem Ausführungsbeispiel von einer bei 40 angedeuteten Beleuchtungseinheit belichtet, die den gesamten Bewegungsbereich, den der weiße Fleck bei Rotation der Scheibe 20 zurücklegt, ausleuchtet. In diesem Ausführungsbeispiel gelangt das Licht 42 der Beleuchtungseinheit 40 von radial außerhalb der Scheibe 20 auf den weißen Fleck 28, d.h. auf die Markierung 26. Die Beleuchtungseinheit 40 erstreckt sich also ringförmig um den optischen Sensor 32 herum, was in der Zeichnung angedeutet ist. Dadurch wird also das Licht der Beleuchtungseinheit 40 in demjenigen Bereich der Scheibe 20, in der sich bei dessen Rotation der weiße Fleck 28 gerade befindet, von dieser Markierung 26 im spitzen Winkel zur Drehachse 30 hin reflektiert, und zwar trifft es als Detektionsstrahlung 44 auf die lichtempfindliche Fläche 36 des optischen Sensors 32. Der in jeder Drehstellung der Scheibe 20 dabei eingenommene räumliche Detektionsstrahlungseinfallwinkel 34 wird mit Hilfe des Sensors 32 und einer diesem nachgeschalteten Auswerteeinheit 46 ermittelt. Die Auswerteeinheit 46 kann ihrerseits die Beleuchtungseinheit 40 ansteuern und verfügt über eine digitale Datenschnittstelle 48 zur Kommunikation der Vorrichtung 14 mit extern angeordneten Vorrichtungen o.dgl.

Bei einer alternativen Ausgestaltung der Vorrichtung 50 kann der weiße Fleck 28, also die Markierung 26, auf einer (z.B. zylindrischen) Umfangsfläche 52 des Drehgebers 18 angeordnet sein. Hierbei befindet sich dann die Beleuchtungseinheit 40 als um den Drehgeber 18 sich erstreckender Ring beispielsweise außerhalb des Drehgebers 18. Seitlich oder an anderer Stelle neben bzw. im Bereich der Beleuchtungseinheit 40 befindet sich dann der ebenfalls in dieser Variante der Erfindung mehrere Sensorelemente aufweisende, ringförmige Sensor 32, der das schräg auf die Umfangsfläche des Drehgebers 18 einfallende Licht nach Reflektion durch die Markierung 26 entsprechend der aktuellen Drehposition des Drehgebers 18 an einem seiner Sensorelemente 54 empfängt.

### BEZUGSZEICHENLISTE

- 10: bezüglich seiner Verdrehung zu detektierendes Teil
- 12: Drehachse des Teils
- 14: Vorrichtung zur Ermittlung des Drehwinkels
- 16: Gehäuse der Vorrichtung
- 18: Drehgeber
- 20: Scheibe des Drehgebers
- 22: Drehachse der Scheibe
- 24: Stirnfläche der Scheibe
- 26: Markierung auf der Stirnfläche
- 28: weißer Fleck als Markierung
- 30: (gedachte) Drehachse des Drehgebers
- 32: Sensor
- 34: Detektionsstrahlungseinfallwinkel
- 36: Strahlungseinfallfläche des Sensors
- 38: Abstand der Markierung zum Mittelpunkt der Scheibe
- 40: Beleuchtungseinheit
- 42: Licht
- 44: von der Markierung ausgehende Detektionsstrahlung
- 46: Auswerteeinheit
- 48: Datenschnittstelle
- 50: Vorrichtung zur Ermittlung des Drehwinkels
- 52: Umfangsfläche des Drehgebers
- 54: Sensorelemente des Sensors

## Patentansprüche

1. Vorrichtung zur Ermittlung des Drehwinkels und/oder der Drehgeschwindigkeit und/oder der Drehrichtung eines um eine Drehachse verdrehbaren Teils, mit
- einem um eine Drehachse (12) verdrehbaren Drehgeber (18), der mit dem verdrehbaren Teil (10) zum drehenden Mitnehmen durch dieses in Wirkverbindung bringbar ist,
**dadurch gekennzeichnet, dass**
- der Drehgeber (18) eine in radialem Abstand (38) zu dessen Drehachse (22,30) angeordnete optisch erfassbare Markierung (26) aufweist, die bei Drehung des Drehgebers (18) eine Bewegungsbahn beschreibt,
- eine die Bewegungsbahn der Markierung (26) belichtende Beleuchtungseinheit (40) zur Erzeugung von Detektionsstrahlung vorgesehen ist, die in Abhängigkeit von der jeweiligen Verdrehposition der optischen Markierung (26) des Drehgebers (18) von dieser bei Drehung des Drehgebers (18) ausgeht, und
- ein optischer Sensor (32) zur drehwinkelabhängigen Erfassung von von der sich mitdrehenden optischen Markierung (26) des Drehgebers (18) während einer Verdrehung desselben ausgehender Detektionsstrahlung (44) vorgesehen ist.

2. Vorrichtung nach Anspruch 1, **dadurch gekennzeichnet, dass** der Drehgeber (18) eine Umfangsfläche (52) aufweist, auf der die Markierung (26) zur Abgabe der Detektionsstrahlung (44) in zur Drehachse (22,30) im Wesentlichen radialer Richtung angeordnet ist.

3. Vorrichtung nach Anspruch 2, **dadurch gekennzeichnet, dass** der optische Sensor der Umfangsfläche (52) des Drehgebers (18) zugewandt angeordnet ist.

4. Vorrichtung nach Anspruch 1, **dadurch gekennzeichnet, dass** der Drehgeber (18) eine von der Drehachse (22,30) durchdrungene, vorzugsweise zur Drehachse (22,30) im Wesentlichen radiale Stirnfläche (24) aufweist, auf der die Markierung (26) zur Abgabe von Detektionsstrahlung (44) in einem spitzen Winkel von der Drehachse (22,30) weg gerichtet oder in einem spitzen Winkel zur Drehachse (22,30) hin gerichtet angeordnet ist.

5. Vorrichtung nach Anspruch 4, **dadurch gekennzeichnet, dass** der optische Sensor (32) zentrisch in Verlängerung der Drehachse (22,30) des Drehgebers (18) angeordnet ist.

6. Vorrichtung nach Anspruch 4 oder 5, **dadurch gekennzeichnet, dass** der optische Sensor (32) die räumliche Richtung, in der von der optischen Markierung (26) Detektionsstrahlung (44) auf den Sensor (32) auftrifft, sensiert.

7. Vorrichtung nach einem der Ansprüche 4 bis 6, **dadurch gekennzeichnet, dass** der optische Sensor (32) die Strahlungseinfallrichtung in einem Zylinderkoordinatensystem mit der Drehachse (22,30) als Bezugsachse oder in einem kartesischen Koordinatensystem mit zwei senkrecht aufeinander stehenden Achsen, deren Kreuzprodukt parallel zur Drehachse (22,30) gerichtet ist, ermittelt.

8. Vorrichtung nach einem der Ansprüche 1 bis 7, **dadurch gekennzeichnet, dass** der optische Sensor (32) ein ein- oder zweidimensionales Array von jeweils für einen anderen Detektionsstrahlungseinfallwinkel sensitiven Sensorelementen aufweist.

9. Vorrichtung nach Anspruch 8, **dadurch gekennzeichnet, dass** vor dem Sensor (32) ein mikrooptisches Filter angeordnet ist, das einzelne, den Sensorelementen jeweils zugeordnete Filterbereiche aufweist, wobei die Filterbereiche jeweils Detektionsstrahlung in einem anderen Einfallwinkel hindurch lässt.

10. Vorrichtung nach einem der Ansprüche 1 bis 9, **dadurch gekennzeichnet, dass** der optische Sensor (32) ein CMOS-Sensor ist.

11. Vorrichtung nach einem der Ansprüche 1 bis 10, **dadurch gekennzeichnet, dass** die Markierung (26) reflektiv ist und von der Beleuchtungseinheit (40) erzeugte Strahlung als Detektionsstrahlung in Richtung auf den optischen Sensor (32) reflektiert.

12. Vorrichtung nach einem der Ansprüche 1 bis 11, **gekennzeichnet durch** ein Gehäuse (16) zur Vermeidung des Einfalls von Umgebungsstrahlung auf den optischen Sensor (32).

13. Vorrichtung nach einem der Ansprüche 1 bis 12, **dadurch gekennzeichnet, dass** der optische Sensor (32) mit einer Auswerteeinheit(46) zur Auswertung von empfangene Detektionsstrahlung repräsentierenden Messsignalen des Sensors (32) zur Ermittlung des aktuellen Drehwinkels bzw. der aktuellen Drehposition, der aktuellen Drehgeschwindigkeit und/oder der aktuellen Drehrichtung verbunden ist.

14. Vorrichtung nach einem der Ansprüche 1 bis 13, **dadurch gekennzeichnet, dass** der Drehgeber (18) als Absolutwertgeber oder als Relativwertgeber ausgebildet ist.

## Claims

1. A device for determining the rotation angle and/or the rotation speed and/or the direction of rotation of a part which is rotatable about an axis of rotation, comprising
- a rotary encoder (18) rotatable about an axis of rotation (12) and adapted to be brought into operative connection with the rotatable part (10) to be rotationally entrained by the rotatable part (10), **characterized in that**
- the rotary encoder (18) comprises an optically detectable marking (26) which is arranged at a radial distance (38) to the axis of rotation (22,30) of the rotary encoder (18) and which, during rotation of the rotary encoder (18), describes a moving path,
- an illuminating unit (40) is provided for illuminating the moving path of the marking (26) so as to generate detection radiation which, during rotation of the rotary encoder (18), is emitted by the optical marking (26) in dependence on the respective rotational position of the optical marking (26) of the rotary encoder (18), and
- an optical sensor (32) is provided for rotational-angle-dependent detection of detection radiation (44) emitted by the co-rotating optical marking (26) of the rotary encoder (18) during rotation of the rotary encoder (18).

2. The device according to claim 1, **characterized in that** the rotary encoder (18) comprises a peripheral surface (52) on which the marking (26) is arranged for emitting the detection radiation (44) in a direction substantially radial to the axis of rotation (22,30).

3. The device according to claim 2, **characterized in that** the optical sensor is arranged facing toward the peripheral surface (52) of the rotary encoder (18).

4. The device according to claim 1, **characterized in that** the rotary encoder (18) comprises a radial end face (24) having the axis of rotation (22,30) passing through it and being preferably arranged substantially radially to the axis of rotation (22,30), the radial end face (24) having the marking (26) for emitting detection radiation (44) arranged on it facing away from the axis of rotation (22,30) at an acute angle or facing toward the axis of rotation (22,30) at an acute angle.

5. The device according to claim 4, **characterized in that** the optical sensor (32) is arranged centrally in extension of the axis of rotation (22, 30) of the rotary encoder (18).

6. The device according to claim 4 or 5, **characterized in that** the optical sensor (32) is operative to sense the spatial direction in which detection radiation (44) from the optical marking (26) is incident on the sensor (32).

7. The device according to any one of claims 4 to 6, **characterized in that** the optical sensor (32) is operative to detect the direction of radiation incidence in a cylindrical coordinate system having the axis of rotation (22,30) as a reference axis, or in a Cartesian coordinate system having two axes standing vertically to each other, the cross product of the axes being oriented parallel to the axis of rotation (22,30).

8. The device according to any one of claims 1 to 7, **characterized in that** the optical sensor (32) comprises a one- or two-dimensional array of sensor elements, each of the sensor elements being sensitive to a different angle of incidence of detection radiation.

9. The device according to claim 8, **characterized in that**, before the sensor (32), a microscopic filter is arranged which comprises individual filter regions respectively assigned to the sensor elements, the filter regions respectively being transmissive to detection radiation at a different angle of incidence.

10. The device according to any one of claims 1 to 9, **characterized in that** the optical sensor (32) is a CMOS sensor.

11. The device according to any one of claims 1 to 10, **characterized in that** the marking (26) is reflective and is adapted to reflect radiation generated by the illuminating unit (40) as detection radiation in the direction of the optical sensor (32).

12. The device according to any one of claims 1 to 11, **characterized by** a housing (16) for avoiding the incidence of ambient radiation onto the optical sensor (32).

13. The device according to any one of claims 1 to 12, **characterized in that** the optical sensor (32) is connected to an evaluation unit (46) for evaluation of measurement signals of the sensor (32) representing received detection radiation, for detection of the current angle of rotation and respectively the current rotational position, the current rotational speed and/or the current direction of rotation.

14. The device according to any one of claims 1 to 13, **characterized in that** the rotary encoder (18) is designed as an absolute encoder or as a relative encoder.

## Revendications

1. Dispositif de détermination de l'angle de rotation et/ou de la vitesse de rotation et/ou de la direction de rotation d'un élément pouvant tourner autour d'un axe de rotation, comprenant
- un capteur rotatif (18) apte à tourner autour d'un axe de rotation (12) et pouvant être amené en liaison active avec l'élément rotatif (10) pour être entraîné en rotation par celui-ci,
**caractérisé en ce que**
- le capteur rotatif (18) présente un marquage (26) détectable optiquement, disposé à une distance radiale (38) de son axe de rotation (22, 30), qui décrit une trajectoire de mouvement lors de la rotation du capteur rotatif (18),
- **en ce qu'**est prévue une unité d'éclairage (40) éclairant la trajectoire de mouvement du marquage (26) pour produire un rayonnement de détection, lequel, en fonction de la position de rotation respective du marquage optique (26) du capteur rotatif (18), est émis à partir de celui-ci lors de la rotation du capteur rotatif (18), et
- **en ce qu'**est prévu un capteur optique (32) pour la détection, en fonction de l'angle de rotation, du rayonnement de détection (44) partant du marquage optique (26) solidaire en rotation du capteur rotatif (18) pendant la rotation de celui-ci.

2. Dispositif selon la revendication 1, **caractérisé en ce que** le capteur rotatif (18) présente une surface périphérique (52) sur laquelle le marquage (26) pour l'émission du rayonnement de détection (44) est disposé dans une direction sensiblement radiale par rapport à l'axe de rotation (22, 30).

3. Dispositif selon la revendication 2, **caractérisé en ce que** le capteur optique est orienté vers la surface périphérique (52) du capteur rotatif (18).

4. Dispositif selon la revendication 1, **caractérisé en ce que** le capteur rotatif (18) présente une surface avant (24), traversée par l'axe de rotation (22, 30), de préférence sensiblement radiale par rapport à l'axe de rotation (22, 30), sur laquelle le marquage (26) pour l'émission du rayonnement de détection (44) est disposé en s'écartant de l'axe de rotation (22, 30) selon un angle aigu ou dirigé vers l'axe de rotation (22, 30) selon un angle aigu.

5. Dispositif selon la revendication 4, **caractérisé en ce que** le capteur optique (32) est disposé de manière centrée dans le prolongement de l'axe de rotation (22, 30) du capteur rotatif (18).

6. Dispositif selon la revendication 4 ou 5, **caractérisé en ce que** le capteur optique (32) détecte la direction spatiale dans laquelle, à partir du marquage optique (26), le rayonnement de détection (44) est incident sur le capteur (32).

7. Dispositif selon l'une des revendications 4 à 6, **caractérisé en ce que** le capteur optique (32) détermine la direction d'incidence du rayonnement dans un système de coordonnées cylindriques avec l'axe de rotation (22, 30) comme axe de référence ou dans un système de coordonnées cartésiennes avec deux axes perpendiculaires l'un à l'autre, dont le produit croisé est dirigé parallèlement à l'axe de rotation (22, 30).

8. Dispositif selon l'une des revendications 1 à 7, **caractérisé en ce que** le capteur optique (32) présente un tableau uni- ou bidimensionnel d'éléments capteurs sensibles respectivement pour un autre angle d'incidence du rayonnement de détection.

9. Dispositif selon la revendication 8, **caractérisé en ce qu'**est disposé en amont du capteur (32) un filtre micro-optique qui présente certaines zones de filtre respectivement associées aux éléments capteurs, les zones de filtre laissant passer respectivement le rayonnement de détection sous un autre angle d'incidence.

10. Dispositif selon l'une des revendications 1 à 9, **caractérisé en ce que** le capteur optique (32) est un capteur CMOS.

11. Dispositif selon l'une des revendications 1 à 10, **caractérisé en ce que** le marquage (26) est réfléchissant et réfléchit le rayonnement produit par l'unité d'éclairage (40) en tant que rayonnement de détection en direction du capteur optique (32).

12. Dispositif selon l'une des revendications 1 à 11, **caractérisé par** un boîtier (16) permettant d'éviter l'incidence du rayonnement ambiant sur le capteur optique (32).

13. Dispositif selon l'une des revendications 1 à 12, **caractérisé en ce que** le capteur optique (32) est relié à une unité d'évaluation (46) pour l'évaluation de signaux de mesure du capteur (32) représentant le rayonnement de détection reçu afin de déterminer l'angle de rotation actuel ou la position de rotation actuelle, la vitesse de rotation actuelle et/ou la direction de rotation actuelle.

14. Dispositif selon l'une des revendications 1 à 13, **caractérisé en ce que** le capteur rotatif (18) est conçu en tant que capteur de valeur absolue ou en tant que capteur de valeur relative.
